# EUROPEAN PATENT APPLICATION

(11) **EP 1 834 558 A1**
(43) Date of publication of application: **19.09.2007**
(21) Application number: 07004575.2
(22) Date of filing: 06.03.2007
(51) Int. Cl.: A47J 37/07

(54) **Apparatus for cooking food in the so-called "charcoal grilled" manner**

(30) Priority: 14.03.2006 IT VI20060069
(71) Applicant: Marcante, Fernando, 35034 Lozzo Atestino (Padova) (IT)
(72) Inventor: Marcante, Fernando, 35034 Lozzo Atestino (Padova) (IT)
(74) Representative: Bettello, Pietro

(57) **Abstract**

The invention regards an apparatus for cooking food according to the so-called "charcoal grill" method of the barbecue or domestic oven configuration type. Such apparatus is characterised in that two separate compartments are identifiable in the hearth, respectively a cooking chamber (6) containing a grill (8) with the food product to be cooked, positioned above the red hot coals, and a combustion chamber (7) that contains a brazier (9) where the fuel (wood or charcoal) is transformed into hot coals.

## Description

The present finding relates to an apparatus for cooking food in the so-called "charcoal grilled" manner, as described in the general part of claim 1.
Varying kinds of cooking apparatuses for external use are commonly found today, above all, those of the type for positioning outside the home and which stand out for their very simple construction and compact size, making them suitable for any environment, especially in gardens, on terraces, verandas, or other open areas; in addition, because of their ease of operation, they can be used safely by all, creating a focal point for meeting with friends or enjoyable family gatherings.

In their simplest configuration the well-known "barbecue" comprises a hearth supported by a frame, sometimes wheel-mounted, composed of a flat plate in refractory material that acts as a brazier to contain the fuel, whether wood or charcoal, and a grill on which the food to be cooked is placed.

Sometimes the barbecue is completed with side walls that enclose the hearth, and possibly, also with a fume extractor hood, so that the general configuration resembles that of a domestic cooking oven.

To obtain correct cooking results, the food must be heated in a uniform manner and the temperature must be controlled constantly, but perfect conditions are generally difficult to obtain using common barbecues or domestic ovens, because, during the cooking action so-called "on the grill" it is impossible to control in a regular manner, the exact amount of active fuel formed by the red-hot coals.
It is a fact, well-known by people who are in the habit of cooking on charcoal, if only for hobby, that the operation of maintaining combustion active in barbecues is rather laborious since it constantly involves the need to raise and move the grill with the food to be cooked from the cooking surface, in order to add further fuel (wood or charcoal) to the hearth.

Practically speaking, this involves interrupting the cooking operation for a varying period of time, according to the ability of the operator to revive the new fuel, and this also provokes a slight temporary cooling of the food product, compromising the end results of the cooking process.

The aim of the present invention is to create an apparatus for cooking food according to the so-called charcoal grilled method, that eliminates the drawbacks that occur when using similar cooking apparatus according to prior art.
In particular, the aim of the present invention is to create a charcoal grill cooking apparatus that provides the possibility of having constantly active fuel (the coals) on the hearth, without the need for continuously interrupting the cooking process of the food on the grill in order to add further wood or charcoal.

These aims can be achieved through a cooking apparatus using the charcoal grill method, comprising a hearth wherein there exist two separate compartments that define a cooking chamber and a combustion chamber, respectively.
The cooking chamber contains the grill with the food to be cooked, positioned above the hot coals, in the usual manner common to all apparatus using the charcoal grill method.
On the other hand, the innovation of the invention is represented by the presence of a combustion chamber, comprising a brazier, where the fuel (wood or charcoal) is transformed into red-hot coals.

Furthermore, according to this invention, the two chambers are adjacent and separated by a partition.

A further innovation is composed of the fact that the two chambers can be interchangeably positioned on the hearth plate.
Thanks to this embodiment concept it is therefore possible to perform two separate operations on the same barbecue or oven at the same time: cooking the food on the coals, and burning the fuel (wood or charcoal) to produce the red-hot coals.

Constructively, the cooking grill and the brazier are applied to the two opposite sides of a partition conceived to rotate around a vertical axis so that, by means of a mechanical or manual action, the position of the two aforesaid elements can be changed on the hearth plate, placing the grill in the position of the brazier, and vicecersa, and all in a simple rapid manner.

In practice, the advantage obtained with apparatus according to the invention, lies in the fact that when the coals positioned underneath the grill in the cooking chamber are almost consumed, simple rotation of the vertical partition is sufficient to place new hot coals in the cooking area, unloaded from the brazier, which is momentarily in the cooking area of the hearth.
The invention will be made more apparent and more clearly defined through the description of a possible embodiment, provided simply as an example but not to be considered by any means limiting, with the help of the appended drawings, wherein:

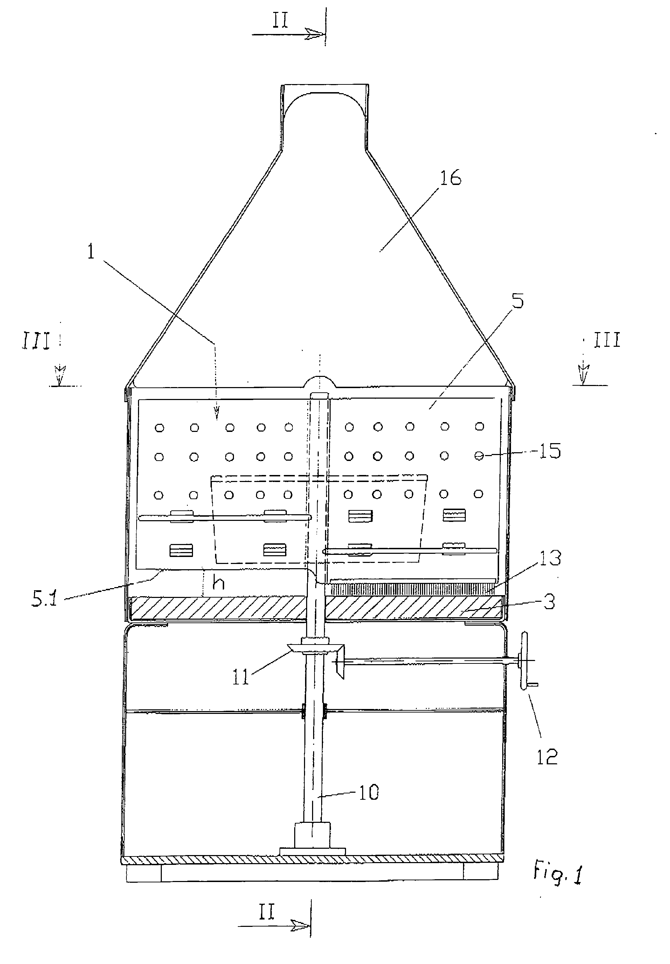

- Figure 1 (table 1) shows a cross section in front elevation of the cooking apparatus according to the invention;

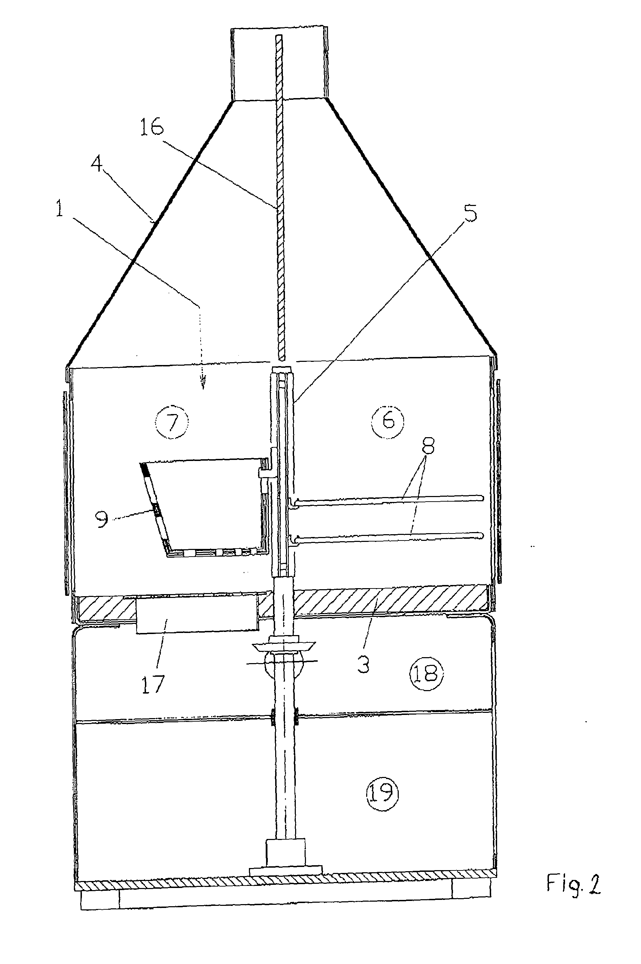

- Figure 2 (table 2) shows a view of the cooking apparatus according to the invention, in side elevation, of the section along the line 11-11 of figure 1;
- Figures 3 and 4 (table 111) represent a plane view of the cooking apparatus, according to the cross section along line 111-111 shown in figure 1, during two different operating conditions.

As can be observed in the drawings, the cooking apparatus according to the invention, identified throughout by the numeral 1, defined by the side walls 2, the base plate 3, and the frustoconical hood of the chimney 4, all according to a configuration commonly recognised, is characterised by the fact that it presents a vertical partition 5, that divides the hearth into two separate compartments, more precisely, the cooking chamber 6, and the combustion chamber 7.

The cooking chamber contains a grill 8, on which the food is positioned for cooking, while the combustion chamber contains the brazier 9, where the fuel (wood or charcoal) is placed for burning, said grill and said brazier being attached on opposite sides of the vertical partition 5.

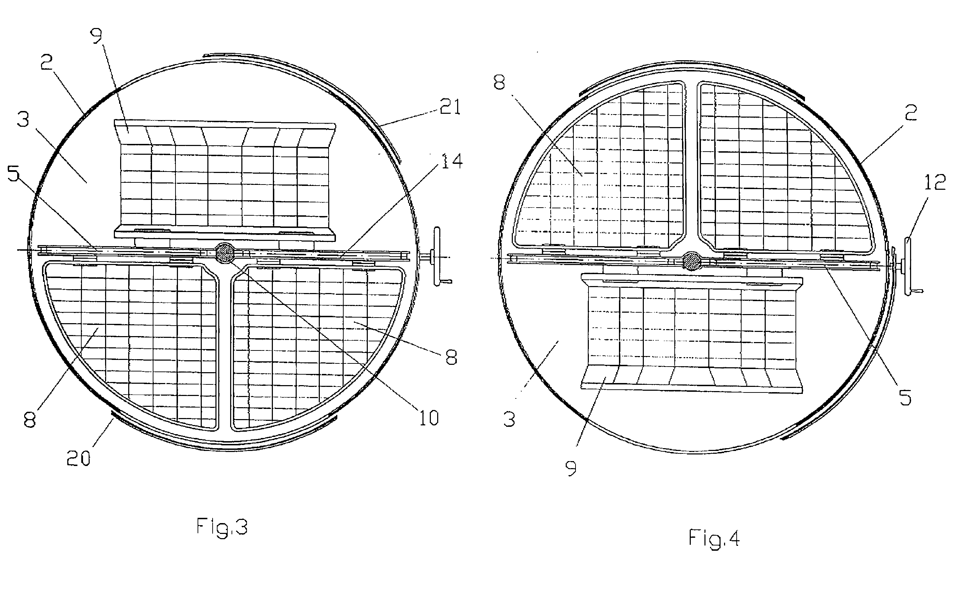

The vertical partition 5 is set on a central pin 10, equipped with a conical torque 11, which, when turned by an external flywheel 12, causes it to rotate, thus inverting the position of the two chambers in the hearth (see figures 3 and 4).

Advantageously, half of the lower edge 5.1 of the vertical partition 5, is raised considerably (see position "h") in relation to the base plate 3, while the other half is mounted with a flexible element 13, such as a metal blade or brush, destined to move the hot coals with each partition rotation, from the combustion area to the cooking area, in other words, to move new coals under the grill continuing to load new fuel onto the brazier without interrupting the cooking process, at the same time.

In a preferred embodiment, the vertical partition 5 which is conceived to protect the operator from the direct combustion heat, is equipped with a hollow cavity 14 and with holes 15 to facilitate the heat transmission between the two chambers, also making transmission more uniform.

In addition, in order to facilitate discharge fume evacuation from the chambers, which, because of the different functions each performs (cooking and combustion respectively) said discharge fumes have different temperatures and different specific weights, a plate 16 has been inserted inside the frustoconical hood 4, to maintain the two discharge fume flows in the two chambers separate as far as the chimney.

The apparatus is completed, under the base plate 3, with the presence of an ash collector pan 17, a compartment 18 to keep food warm, and a storage compartment 19, to store the fuel (wood and charcoal), as well as a front door 20, and if necessary, a rear door 21, that can be moved to slide on the exterior of the side wall 2 to permit access to the two chambers 6 and 7.
Obviously other embodiments of the apparatus different from that described are perfectly possible, such as a simpler version, without the hood and external casing, in the configuration of a cheaper barbecue model, while remaining within the context of the invention as described in the following claims.

## Claims

1. APPARATUS FOR COOKING FOOD ACCORDING TO THE SO CALLED "CHARCOAL GRILL" METHOD, of the barbecue or domestic oven configuration type, said apparatus being **characterised in that** the hearth is composed of two separate distinct compartments, respectively, a cooking chamber (6) containing a grill (8) with the food product to be cooked, positioned above red hot coals, and a combustion chamber (7) that contains a brazier (9) where the fuel (wood or charcoal) is transformed into coals.

2. COOKING APPARATUS according to claim 1, **characterised in that** the two chambers (6,7) are adjacent and separated by a partition (5).

3. COOKING APPARATUS according to claim 2, **characterised in that** the two chambers (6,7) are interchangeable with each other on the same hearth plate.

4. COOKING APPARATUS according to claim 3, **characterised in that** the two chambers (6,7) can be interchanged by means of the rotation of the vertical separating partition (5).

5. COOKING APPARATUS according to one or more of the previous claims, which presents a hearth (1) defined by the side walls (2), a base plate (3) and a frustoconical hood on the chimney (4), said apparatus being **characterised in that** it presents a vertical partition (5) that divides the hearth into two separate compartments to form a cooking chamber (6) and a combustion chamber (7) wherein the cooking chamber (6) contains a grill (8) on which the food to be cooked is placed, while the combustion chamber (7) contains a brazier (9) where the material (wood or charcoal) for burning is placed.

6. COOKING APPARATUS according to claim 5, **characterised in that** the grill (8) and the brazier (9) are attached to opposite sides of the vertical partition (5).

7. COOKING APPARATUS according to claim 6, **characterised in that** the vertical partition (5) is mounted on a central pin (10) conceived to rotate around its longitudinal axis.

8. COOKING APPARATUS according to claim 7, **characterised in that** the central pin (10) is equipped with a conical torque (11), which when activated by an automatic mechanical control means such as an electric motor, or when activated by hand using an external flywheel (12), causes said pin to rotate so as to invert the positions of the two chambers attached to it in the hearth.

9. COOKING APPARATUS according to one or more of the previous claims, **characterised in that** the lower edge (5.1) of half of the vertical partition (5) is raised considerably in relation to the base plate (3), while the other half is mounted with a flexible element (13) such as a metal blade or brush, conceived to move the incandescent coals from the combustion area to the cooking area, with each rotation of the partition, in order to move new coals under the grill without interrupting the cooking process, and at the same time, loading new fuel into the brazier.

10. COOKING APPARATUS according to one or more of the previous claims, **characterised in that** the vertical partition (5) is equipped with a hollow cavity (14).

11. COOKING APPARATUS according to one or more of the previous claims, **characterised in that** the vertical partition (5) is perforated with holes (15)

12. COOKING APPARATUS according to one or more of the previous claims, **characterised in that** a plate (16) is inserted inside the frustoconical hood (4) to maintain the two discharge fume flows of the two chambers (6,7) separate until they reach the chimney.

13. COOKING APPARATUS according to one or more of the previous claims, **characterised in that** it also contains an ash collector pan (17), a food-warming compartment (18) and a storage compartment (19) for storing material for burning (wood or charcoal).

14. COOKING APPARATUS according to one or more of the previous claims, **characterised in that** it is equipped with a front door (20) and if necessary, also a rear door (21) to permit access to the two chambers (6,7).
